# EUROPEAN PATENT APPLICATION

(11) **EP 2 557 115 A1**
(43) Date of publication of application: **13.02.2013**
(21) Application number: 12179613.0
(22) Date of filing: 08.08.2012
(51) Int. Cl.: C08K 5/00, C09K 21/08

(54) **Novel flame-retardant composition for polystyrenic compounds**

(30) Priority: 09.08.2011 IT VI20110231
(71) Applicant: Lorenzi, Micaela, 20900 Monza (MB) (IT); Zambotti, Sabrina Francesca, 20090 Cusago (MI) (IT)
(72) Inventor: Lorenzi, Micaela, 20900 Monza (MB) (IT); Zambotti, Sabrina Francesca, 20090 Cusago (MI) (IT)
(74) Representative: Autuori, Angelo

(57) **Abstract**

A flame-retardant composition for a polystyrene foam or a high impact polystyrene-based compound consisting exclusively of a single brominated compound **(R1)** and by a nitrogen- and bromine-free single free radical generator synergistic agent **(R2).** The single brominated compound **(R1)** is formed exclusively by tetrabromobisphenol A-bis (2,3-dibromopropylether), while the synergistic agent **(R2)** is formed exclusively by 2,3-dimethyl-2,3-diphenylbutane and/or Bis (1-methyl-1-phenylethyl) peroxide. The composition is free of antimony trioxide and hexabromocyclododecane. The weight ratio between tetrabromobisphenol A bis (2,3-dibromopropylether) and said synergistic agent **(R1: R2)** is of 100:1 and 1:2.

## Description

### Field of application

The present invention is generally applicable to the technical field of polymer chemistry, and particularly relates to a flame-retardant composition for polystyrene compounds, in particular polystyrene foams or high impact polystyrene-based compounds.

The invention further relates to the use of such a composition as a flame-retardant additive in a polystyrene-based compound, in particular in a polystyrene foam or a high impact polystyrene-based compound.

The invention further relates to the use of the above composition for the preparation of a concentrated mixture of additives, for example in the form of masterbatch, tablet or compacted, to be included in a polystyrene-based compound, in particular in a polystyrene foam or a high impact polystyrene-based compound.

The invention further relates to a polystyrene-based compound, in particular a polystyrene foam or a high impact polystyrene-based compound, which includes the above composition.

The invention further relates to a concentrated mixture of additives, for example in the form of masterbatch, tablet or compacted, to be included in a polystyrene-based compound, in particular in a polystyrene foam or a high impact polystyrene-based compound.

The invention further relates to an article of polymeric material that includes the above mentioned compound, in particular an insulating panel.

### State of the Art

Various flame-retardant additives for polystyrene foams are known.

For example, the U.S. patent 3420786 discloses a flame-retardant additive for polystyrene foams that includes hexabromocyclododecane and dicumene.

Although this additive shows good extinguishing times, today it is appropriate to avoid the use of hexabromocyclododecane to lower the environmental impact of the polymer.

It is also known that hexabromocyclododecane-based additives require thermal stabilization in extruded polystyrene (XPS).

Therefore, for this purpose various flame-retardant additives free of hexabromocyclododecane have been developed for polystyrene foams.

For example, from the international application W02007/058736 a flame-retardant additive S13S brominated based is known. From U.S. patent US5569681 a flame-retardant additive for polypropylene-based compound is also known that includes tetrabromobisphenol A bis (2,3-dibromopropyl ether) and antimony trioxide.

A flame-retardant additive for polystyrene foams is also known that includes tetrabromobisphenol A bis (2,3-dibromopropyl ether), antimony trioxide and dicumene as synergistic agents.

Even if this additive has shown in practice good extinguishing times, the relative concentrations of use are high.

Antimony trioxide has also a high impact on health and environment, being an agent suspected of causing cancer.

The need for new flame-retardant additives for polystyrene foams is furthermore always high.

From the international application WO2010/125894 a flame-retardant composition is known that includes polystyrene and a mixture of two brominated flame-retardants, a first brominated compound having a 2,3-dibromopropyl group or a bromine content greater than 60% in which all atoms of bromine are bound to a benzene ring, and a second brominated compound having a 2,3-dibromo-2-alkylpropyl group.

In this known flame-retardant additive the presence of the second brominated compound that contains the 2,3-dibromo-2-alkylpropyl group in combination with the first brominated compound is compulsory. In fact, in this application it is clearly demonstrated that the first brominated compound alone does not confer flame-retardant properties to the composition, even in the presence of other brominated compounds having the same properties.

From international application WO2010/125893 a flame-retardant composition is known that includes polystyrene and a mixture of two brominated flame retardants, a first brominated compound having a 2,3-dibromo-2-alkylpropyl group and a second brominated compound having a bromine content greater than 50% to not having bromine atoms bound to tertiary carbon atoms.

Also in this known flame-retardant additive the presence of the second brominated compound that contains the 2,3-dibromo-2-alkylpropyl group in combination with the first brominated compound is compulsory.

From U.S. application 2006/229372 a flame-retardant composition is known comprising polystyrene and a mixture of flame-retardant that includes a brominated compound having a bromine content greater than 60% by weight and a weight loss of 5% at a temperature ranging between 190 °C and 320 °C, and a sterically hindered amine.

In this known flame-retardant additive the presence of the sterically hindered amine in combination with the brominated compound is compulsory. In fact, in that application it is clearly demonstrated that the brominated compound alone does not confer the flame-retardant properties to the composition, even in great quantities and in presence of dicumene.

Moreover, this application teaches that a brominated compound that has weight loss of 5% at a temperature greater than 280 °C must be used in great quantities.

### Definitions

As used herein, the expression "compound" or derivates therefrom means a polymeric material that includes one or more polymers modified to achieve the desired performances.

As used herein, the expression "based compound" or derivates therefrom preceded by the designation of a polymeric material means a compound having molecular structure conferred by the polymeric material itself.

As used herein, the expression "polystyrene foam" or derivates therefrom means a polystyrene compound consisting of expanded sintered (EPS) or extruded (XPS) type polystyrene.

As used herein, the expression "high impact polystyrene" or derivates therefrom means a styrene-butadiene copolymer (HIPS).

As used herein, the expression "concentrated mixture of additives" or derivates therefrom means a mixture that includes one or more additives dispersed or not in a carrier material, for example wax or polymer, obtained by any process known to the person skilled in the art and having any shape, to be included in a polymeric material in order to confer it the properties deriving from the above one or more additives.

As used herein, the expression "masterbatch" or derivates therefrom means a concentrated mixture of additives dispersed in a carrier material, for example a polymer, obtained by means of extrusion process.

As used herein, the expression "tablet" or derivates means a concentrated mixture of additives dispersed or not in carrier, for example wax or polymer, obtained by a tableting process.

As used herein, the expression "compacted" or derivates therefrom means a concentrated mixture of additives dispersed or not in carrier, for example wax or polymer, obtained by a compacting process.

As used herein, unless otherwise specified, all percentages are to be understood as dry weight percentages with respect to the total dry weight of the respective polymer material.

The tetrabromobisphenol A-bis (2,3-dibromopropylether) [R1], commonly said BDDP, has CAS number 21850-44-2.

The 2,3-dimethyl-2 ,3-diphenylbutane [R2], commonly said dicumene, has CAS number 1889-67-4.

The Bis (1-methyl-1-phenylethyl) peroxide [R2], commonly known as dicumyl peroxide, has CAS number 80-43-3.

The antimony trioxide has CAS number 1309-64-4.

The hexabromocyclododecane, commonly known as HBCD, has CAS number 3194-55-6 or 25637-99-4.

As used herein, the term "filler" and derivates therefrom includes at least one inorganic solid compound suitable to improve the mechanical properties of the polymeric compound in which it is inserted.

As used herein, the term "processing aid" and derivates therefrom means a compound or a mixture of compounds able to simplify the processing and/or plasticization of the polymeric compound into which it is inserted.

As used herein, the term "antioxidant" and derivates therefrom means a compound or a mixture of compounds suitable to slow or prevent the oxidation of the polymeric compound into which it is inserted during or after the production thereof.

As used herein, the term "nucleating" and derivates therefrom means a compound or a mixture of compounds suitable to start the formation of cells in a foam of the polymeric compound in which it is inserted.

### Summary of the invention

It is an object of the present invention to provide a flame-retardant composition which is effective for polystyrene compound, in particular polystyrene foams or high impact polystyrene-based compound.

A further object of the invention is to provide a flame-retardant composition having a low environmental impact.

A further object of the invention is to provide a flame-retardant composition having a low impact on human health.

A further object of the invention is to provide a relatively cheap flame-retardant composition.

A further object of the invention is to provide a flame-retardant composition which can be used in relatively small quantities having relatively high efficacy.

These and other objects, as better explained hereafter, are fulfilled by the invention having one or more of the features herein disclosed and/or claimed.

The flame-retardant composition according to the present invention may exclusively consist of a single brominated compound **(R1)** and by a nitrogen- and bromine-free single free radical generator synergistic agent **(R2).**

In particular, the single brominated compound **(R1)** may consist exclusively of tetrabromobisphenol A-bis (2,3-dibromopropylether) **[R1],** while the synergistic agent **[R2]** may consist of 2,3-dimethyl-2,3-diphenylbutane and/or Bis (1-methyl-1-phenylethyl) peroxide.

In a preferred non exclusive embodiment, the flame-retardant composition according to the present invention may consist of tetrabromobisphenol A-bis (2,3-dibromopropylether) **[R1]** and 2,3-dimethyl-2,3-diphenylbutane as synergistic agent **[R2].**

In another preferred non exclusive embodiment, the flame-retardant composition according to the present invention may consist of tetrabromobisphenol A-bis (2,3-dibromopropylether) **[R1]** and Bis (1-methyl-1-phenylethyl) peroxide as a synergistic agent **[R2].**

In a further preferred non exclusive embodiment, the flame-retardant composition according to the present invention may consist of tetrabromobisphenol A-bis (2,3-dibromopropylether) **[R1]** and a mixture of 2,3-dimethyl-2,3-diphenylbutane and Bis (1-methyl-1-phenylethyl) peroxide as a synergistic agent **[R2].**

In case the flame-retardant composition according to the present invention includes both 2,3-dimethyl-2,3-diphenylbutane and Bis (1-methyl-1-phenylethyl) peroxide as a synergistic agent, the two compounds may be present in any mutual weight ratio.

Suitably, the flame-retardant composition according to the present invention may be free of antimony trioxide and hexabromocyclododecane.

As clearly demonstrated hereafter, the weight ratio R1:R2 between tetrabromobisphenol A bis (2,3-dibromopropylether) and the at least one synergistic agent may be of 100:1 to 1:2.

Preferably, the weight ratio R1:R2 between tetrabromobisphenol A bis (2,3-dibromopropylether) and the at least one synergistic agent may be of 50:1 to 2:1, preferably of 30:1 to 2:1 and even more preferably of 20:1 to 2:1.

Ideally, in a preferred non exclusive embodiment of the invention, the weight ratio R1:R2 between tetrabromobisphenol A bis (2,3-dibromopropylether) and the at least one synergistic agent may be of 20:1 to 5:1.

According to a further aspect of the invention, the above composition may be suitably used as a flame retardant additive in a polystyrene foam or a high impact polystyrene-based compound.

The polymeric compound may essentially consist of:
(A) polystyrene, in particular XPS, EPS or HIPS depending on whether it is a polystyrene foam (EPS or XPS) or of a high impact polystyrene-based compound (HIPS);
(B) the flame-retardant composition according to the present invention;
(C) optionally one or more additives.

The weight percentages of components (A), (B) and (C) may vary depending on whether the polymeric compound is a polystyrene foam or a high impact polystyrene-based compound. Indicatively, the component (A) may be present in a weight percentage of 20% to 99,5% with respect to the total weight of the polymeric compound.

In particular, the percentage weight of polystyrene (A) may be (although not necessarily) greater in the case of polystyrene foams and lower in the case of compounds based on high impact polystyrene.

The component (A) polystyrene may consist entirely of virgin polymer or may include a percentage weight of 0% (i.e. not present) - 50% of regenerated polystyrene.

Advantageously, the composition flame retardant (B) according to the invention may be present in the polystyrene foam in a overall maximum weight percentage of 10% with respect to the total weight of the polymeric compound, preferably in a overall maximum weight percentage of 5% with respect to the total weight of the polymeric compound, and even more preferably in a overall maximum weight percentage of 3% with respect to the total weight of the polymeric compound.

Ideally, in a preferred non exclusive embodiment of the invention, the flame retardant additive according to the invention may be present in the polystyrene foam in a overall maximum weight percentage of 1% with respect to the total weight of the polymeric compound.

On the other hand, the flame retardant additive according to the invention may be present in the high impact polystyrene-based compound in an overall maximum weight percentage of 25% with respect to the total weight of the polymeric compound, preferably in a percentage maximum total weight of 10% with respect to the total weight of the polymeric compound, more preferably in a overall maximum weight percentage of 6% with respect to the total weight of the polymeric compound, and even more preferably in a overall maximum weight percentage of 4% with respect to the total weight of the polymeric compound.

The additives (C) may be present or not in the polymeric compound, and may be of conventional type, well known to the person skilled in the art of the processing of polymeric materials. If present, the additives (C) may be present in a weight percentage of 0,1% to 60% with respect to the total weight of the polymeric compound.

The same additives may be selected from those present in the manuals and/or in the technical literature relating to the above art. As non-limiting example, the additives may be selected from those disclosed in the international application W02006/132900 and/or in U.S. application 2006/047049, to which reference is made for proper consultation.

Similarly, the person skilled in the art of the processing of polymeric materials will be able to determine the proper weight percentages of use for the various additives in the polymeric compound, so as to vary the same according to need.

The additives may be advantageously selected from the group consisting of: fillers, process aids, stabilizers, impact modifiers, pigments, lubricants, antioxidants, anti-UV agents, nucleating agents, compatibilizers, expanding gases, polyethylene waxes and/or copolymers thereof.

As non-limiting example, the filler may consist of talc and/or calcium carbonate. Suitably, the filler may be present in the compound in a weight percentage ranging from 0% (i.e. not present) to 40% by weight with respect to the total weight of the compound.

As non-limiting example, the process aid may consist of glycerol monostearate and/or stearates of metals. Suitably, the processing aid may be present in the compound in a weight percentage ranging from 0% (i.e. not present) to 30% by weight with respect to the total weight of the compound.

As non-limiting example, the antioxidant may consist of a sterically hindered phenolic compound having high molecular weight. Suitably, the antioxidant may be present in the compound in a weight percentage ranging from 0% (i.e. not present) to 10% by weight with respect to the total weight of the compound.

As non-limiting example, the nucleating agent may consist of talc, hydrocerol, sulfates of metals, bentonite or a mixture thereof. Suitably, the nucleating agent may be present in the compound in a weight percentage ranging from 0% (i.e. not present) to 40% by weight with respect to the total weight of the compound.

The expanding gas may consist of carbon dioxide, alcohol, hydrocarbon gases, HFC or a mixture of two or more thereof. Suitably, it may be present in the compound in a weight percentage ranging from 0% (i.e. not present) to 40%.

The polyethylene waxes and/or their copolymers may be present in the compound in a weight percentage ranging from 0% (i.e. not present) to 50%.

The polymeric compound according to the invention may be prepared by any process per se known in the technical field of the processing of polymers, for example by dry blending or extrusion.

An expanded polystyrene foam according to the present invention may have the following formulation:
(A) 50% - 99,5% by weight, preferably 80% - 99,5% by weight of sintered (EPS) or extruded (XPS) type polystyrene;
(B) 0,45% - 10% by weight, preferably 0,45% - 5% by weight, more preferably 0,45% - 3% by weight, even more preferably 0,45% - 1% by weight, of the above mentioned flame-retardant composition;
(C) 0% (i.e. not present in the compound) - 50% by weight, preferably 0,1% - 10% by weight, more preferably 0,1% - 5% by weight, of at least one additive selected from the above mentioned group;
wherein the sum of the weight percentages of components (A), (B) and (C) is 100%. Preferably, the component (B) may include:
- tetrabromobisphenol A-bis (2,3-dibromopropylether) **(R1)** in a weight percentage of 0,1% to 9,99% by weight with respect to the total weight of the polystyrene foam, preferably of 0,1% to 5% by weight with respect to the total weight of the polystyrene foam, and even more preferably of 0,1% to 3% by weight with respect to the total weight of the polystyrene foam;
- synergistic agent **(R2)** in a weight percentage of 0,01% to 5% by weight with respect to the total weight of the polystyrene foam, and preferably of 0,01% to 1% by weight with respect to the weight total of polystyrene foam.

In a preferred non exclusive embodiment of the invention, the polystyrene foam may have the following formulation:
(A) 80% - 95% by weight of polystyrene EPS or XPS;
(B) 0,1% - 9,99% by weight, preferably 0,1% - 5% by weight, still more preferably 0,1% - 3% by weight of tetrabromobisphenol A-bis (2,3-dibromopropylether) **(R1);**
   0,01% - 5% by weight, preferably 0,01% - 1% by weight, of the synergistic agent **(R2)** as defined above, and
(C) 0,1% - 20% by weight, preferably 0,1 - 10% by weight, and still more preferably 0,1% - 5% by weight of the additive.

Preferably, the component (C) may include 0,1% - 2% by weight of a nucleating agent or a filler, preferably talc, and optionally 0,1% - 2% by weight of a process aid, preferably calcium stearate or glycerol monostearate.

The sum of the weight percentages of components (A), (B) and (C) must be 100%.

The polystyrene foam according to the invention may be prepared by any process per se known in the technical field of the processing of the polymers.

For example, the polystyrene foam according to the present invention may be prepared by a production process of XPS, by mixing in an extruder the above described masterbatch in a suitable amount of pure polystyrene granulates. The blowing gas and any other additives useful in the process may be subsequently added to this mixture. Alternatively, the extrusion process may take place by dosing at the same time polystyrene, expanding gas and additives in any physical form, as non limiting example masterbatch and/or powders and/or compacted and/or a mixture thereof.

On the other hand, the polystyrene foam according to the present invention may be prepared by a production process of EPS. This process involves several steps: the flame-retardant composition according to the invention and any further additives process (radical initiator, mixture of surfactants, stabilizing agents of the emulsion or the like) are mixed to an aqueous emulsion of styrene; the polymerization of styrene is performed; the present water is separated; a sieving of the polystyrene thus obtained is carried out; finally the next expansion is carried out by heating at a controlled temperature and pressure (for example with water steam).

Any blowing gas known to the person skilled in the art may be employed, as non limiting example, aliphatic hydrocarbons, such as pentane or butane, carbon dioxide, HFC, ethers, alcohols or mixtures thereof. As non-limiting example, the blowing agents mentioned in the international application W02006/132900, to which reference is made for consultation, may be employed.

The skilled person will be able to determine the quantity of blowing gas to be used according to the requirements of the case. As non-limiting example, the expanding gas will be 2% - 15% by weight with respect to the total weight of the polymeric compound in which it is inserted.

A high impact polystyrene-based compound according to the present invention may have the following formulation:
(A) 20% - 99,5% by weight, preferably 60% - 95% by weight of high impact polystyrene (HIPS);
(B) 0,1% - 25% by weight, preferably 0,5% - 10% by weight, more preferably 1% - 6% by weight, even more preferably 2% - 4% by weight of the flame-retardant composition mentioned above;
(C) 0% - 50% by weight, preferably 0,1% - 20% by weight, more preferably 0,1% - 10% by weight, of at least one additive selected from the group specified above but without the presence of expanding gas;
wherein the sum of the weight percentages of components (A), (B) and (C) is 100%. Preferably, the component (B) may include:
- tetrabromobisphenol A-bis (2,3-dibromopropylether) **(R1)** in a weight percentage of 0,1% to 24.99% by weight with respect to the total weight of the compound, preferably of 0,1% to 10% by weight with respect to the total weight of the compound, and even more preferably of 0,1% to 6% by weight with respect to the total weight of the compound;
- synergistic agent **(R2)** in a weight percentage of 0,01% to 5% by weight with respect to the total weight of the compound, and preferably of 0,01% to 2% by weight with respect to the total weight of the compound.

In a preferred non exclusive embodiment of the invention, the high impact polystyrene-based compound may have the following formulation:
(A) 80% - 95% by weight of high impact polystyrene (HIPS);
(B) 2% - 6% by weight of tetrabromobisphenol A-bis (2,3-dibromopropylether) **(R1);**
   0,1% - 1% by weight of the synergistic agent **(R2)** as defined above, and
(C) 0,1% - 15% by weight of additive.

Preferably, the component (C) may include 0,1% - 10% by weight of filler, preferably talc or glass fiber, and optionally 0,1% - 2% by weight of a process aid, preferably calcium stearate or glycerol monostearate.

The sum of the weight percentages of components (A), (B) and (C) must be 100%.

The compound made of high impact polystyrene (HIPS) according to the invention may be prepared by any method known to the person skilled in the art, as non-limiting example by extrusion, injection molding, pressing, vacuum forming.

Suitably, the flame-retardant composition according to the present invention may be introduced into the polymeric compound in any manner known to the person skilled in the art.

Advantageously, however, it may be included in the compound via a concentrated mixture of additives that includes the flame-retardant composition, in the form of masterbatches, tablets or compacted.

The concentrated mixture of additives may be mixed in a predetermined amount to a predetermined quantity of pure polymer, of the XPS, EPS or HIPS type. As non-limiting example, this amount may be of 1% to 30% by weight with respect to the weight of the pure polymer in which the concentrated mixture of additives is added.

The concentrated mixture of additives has the advantage of reducing the environmental impact of the powders in the working place, allowing a more precise dosing of the additives, especially when added at low concentrations, and improving the dispersion thereof in the finished product, being them additives already premixed.

In a further aspect of the invention, the above mentioned flame-retardant composition may be used for the preparation of a concentrated mixture of additives suitable to be included in a polystyrene foam or a high impact polystyrene-based compound.

The concentrated mixture of additives may be prepared by any method known to the person skilled in the art, for example by extrusion to prepare a masterbatch, by tableting to prepare a tablet or by compaction to prepare a compacted.

A mixture of concentrated additives according to the present invention may have the following formulation:
(A) 0% (i.e. not present) - 60% by weight, preferably 25% - 55% by weight, more preferably 30% - 50% by weight, of a carrier material, which may be chosen among the polystyrenes, the polyolefins or waxes, such as polyolefin-type or ester-based waxes;
(B) 15% - 100% by weight, preferably 40% - 70% by weight of the above mentioned flame-retardant composition;
(C) 0% (i.e. not present) - 50% by weight, preferably 15% - 30% by weight, more preferably 20% - 25% by weight, of at least one additive selected from the group consisting of: fillers, process aids , stabilizers, pigments, lubricants, antioxidants, anti-UV agents, compatibilizers;
wherein the sum of the weight percentages of the components (A), (B) and (C) is 100%.

The presence or absence of the carrier material is given by the form of the final concentrated mixture of additives.

In fact, if the latter is in the form of masterbatches, the carrier material may be present.

By contrast, if the concentrated mixture of additives is in the form of a tablet or a compacted, the carrier material may not be present. In this case, the component (B) may be present in an even very high percentage, up to 100% by weight of the concentrated mixture of additives (i.e. the latter consists entirely of the composition according to the invention).

The additives (C), if present, may be essentially the same as mentioned above. The person skilled in the art can determine which additives to use 0depending on the properties to be given to the compound in which the concentrated mixture of additives must be introduced, as well as their quantity in the mixture.

Suitably, in the mixture of concentrated additives according to the invention the component (B) may include:
- tetrabromobisphenol A-bis (2,3-dibromopropylether) **(R1)** in a weight percentage of 13% to 95% by weight with respect to the total weight of the mixture, and preferably of 30% to 90% by weight with respect to the total weight of the mixture;
- synergistic agent **(R2)** in a weight percentage of 0,1% to 10% by weight with respect to the total weight of the mixture, and preferably of 0,5% to 6% by weight with respect to the total weight of the mixture.

A masterbatch according to the present invention may have the following formulation:
(A) 20% - 60% by weight of carrier material, such as polystyrene or polyethylene;
(B) 15% - 60% by weight of flame-retardant composition according to the present invention;
(C) 0% (i.e. not present) - 50% by weight of at least one additive, which may be advantageously selected from the group mentioned above.

The sum of the weight percentages of components (A), (B) and (C) must be 100%.

In a preferred non exclusive embodiment of the invention, the masterbatch may have the following formulation:
(A) 25% - 55% by weight, preferably 30% - 50% by weight of carrier material;
(B) 30% - 55% by weight, preferably 40% - 50% by weight of tetrabromobisphenol A-bis (2,3-dibromopropylether) **(R1);**
   0,1% - 10% by weight, preferably 0,5% - 6% by weight, of at least one synergistic agent **(R2)** as defined above, and
(C) 2% - 30% by weight, preferably 20% - 25% by weight of additive, preferably a filler, preferably talc.

The sum of the weight percentages of components (A), (B) and (C) must be 100%.

A tablet or a compacted according to the present invention may have the following formulation:
(A) 0% (i.e. not present) - 50% by weight of carrier material, for example wax or polymer;
(B) 40% - 100% by weight of flame-retardant composition according to the present invention;
(C) 0% (i.e. not present) - 10% by weight of at least one additive, which may be advantageously selected from the group mentioned above.

The sum of the weight percentages of components (A), (B) and (C) must be 100%.

In a preferred but not exclusive embodiment of the invention, the tablet may have the following formulation:
(A) 20% - 35% by weight of carrier material, for example wax or polymer;
(B) 60% - 80% by weight of flame-retardant composition according to the present invention;
(C) 0% (i.e. not present) - 10% by weight of at least one additive, which may be advantageously selected from the group mentioned above.

By means of the polymeric compound according to the invention it is possible to manufacture polymeric articles in polystyrene foam, and in particular insulating panels.

The invention will be fully described by means of the following examples which, however, are intended solely as explanatory but not limiting the invention.

### Examples

Several specimens C1 - C27 of polystyrene-based compound has been prepared. The specimens have the composition according to the following Table 1. All components are expressed in percentage by weight with respect to the total weight of the specimen. The raw materials used were as follows:
(A) polystyrene GPPS 130M marketed by Ineos Nova;
(B) tetrabromobisphenol A-bis (2,3-dibromopropylether) [R1] marketed by Sigma Aldrich;
(B) 2,3-dimethyl-2 ,3-diphenylbutane [R2] CCDFB-90 marketed by Peroxitalia;
(B) Bis (1-methyl-1-phenylethyl) peroxide [R2] marketed by Sigma Aldrich;
(C) fillers: talc HTP4 marketed by Imifabi.

All specimens C1-C27 were tested according to the known test UL94 V-2. The specimens C1-C27 were prepared by inserting the various components in a press to mold them, according to the specifications of the UL94 test. The results of these tests are summarized in the following Table 1.

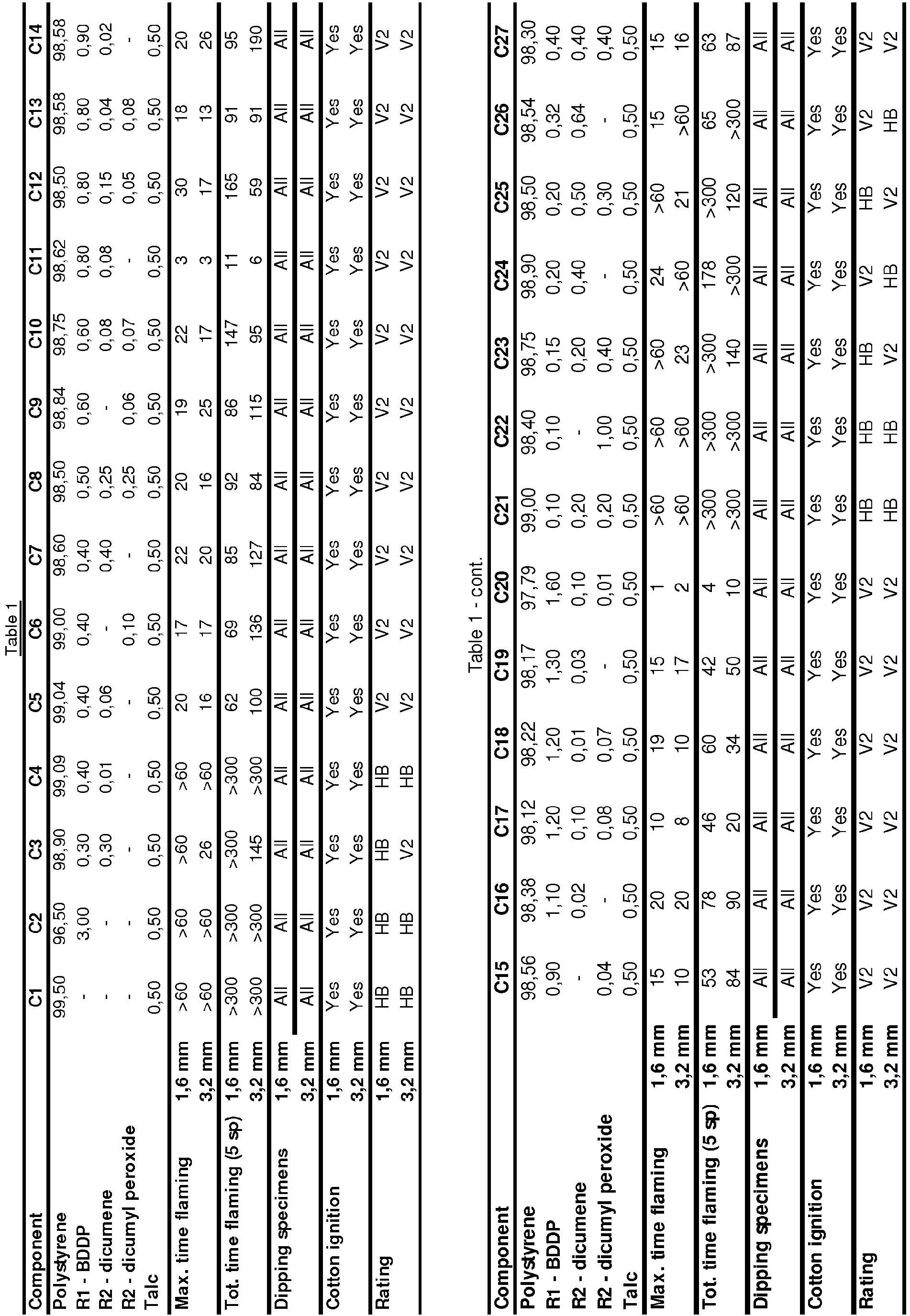

From the results in Table 1, it is clearly self-evident that the specimens with no flame retardant additive (C1) or which include only tetrabromobisphenol A bis (2,3-dibromopropylether) **[R1]** do not pass the test UL94 V-2.

From the results in Table 1, for example by comparison of specimens C4 and C5, it is also evident that below a certain weight percentage of tetrabromobisphenol A bis (2,3-dibromopropylether) and synergistic agent **[R1+R2],** the specimen does not pass the test UL94 V-2.

Without being bound by theory, it is stated that a polystyrene foam which includes a percentage of flame-retardant composition according to the present invention lower than 0,45% by weight relative to the total weight of the compound does not fall within the scope of the present invention.

Furthermore, from the results in Table 1, for example by comparison of specimens C3, C7, C8 and C21-27, it is clear that when the weight ratio tetrabromobisphenol A bis (2,3-dibromopropylether):synergistic agent **R1:R2** in the additive flame retardant is greater than a certain value, the specimen does not pass the test UL94 V-2.

Without being bound by theory, it is stated that an additive flame retardant in which the weight ratio tetrabromobisphenol A bis (2,3-dibromopropylether): synergistic agent **R1:R2** is less than 1:2 does not fall within the scope of the present invention.

For example, specimens C21 (ratio **R1:R2** equal to 1:4) and C22 (ratio **R1:R2** equal to 1:10) does not fall within the scope of the present invention.

The maximum amount of flame retardant additive in the polystyrene compound depends on various factors, including the cost of the compound and the processability thereof.

Without being bound by theory, it is stated that a polystyrene foam which includes a quantity of flame retardant additive greater than 10% by weight with respect to the total weight of the compound does not fall within the scope of the present invention.

From the results in Table 1, for example by comparison of specimens C6, C10 and C12, it is self-evident that with the same weight ratio tetrabromobisphenol A bis (2,3-dibromopropylether): synergistic agent **R1:R2** the increasing of the quantity of a flame retardant additive in the compound does not mean a significant increase of the results, and instead sometimes a decreasing thereof has been observed.

Therefore, to minimize the impact of the compound on the environment and/or on human health, the total quantity of flame retardant additive in the polystyrene-based compound may be less than 5% by weight with respect to the total weight of the compound, preferably less to 3% by weight with respect to the total weight of the compound, and even more preferably less than 1% by weight with respect to the total weight of the compound.

Suitably, the weight ratio tetrabromobisphenol A bis (2,3-dibromopropylether): synergistic agent **R1:R2** may be of 100:1 to 1:2.

Furthermore, from the results in Table 1, for example by comparison of specimens C5-C20, it is self-evident that the best results are obtained when the quantity of tetrabromobisphenol A bis (2,3-dibromopropylether) **[R1]** is greater than the amount of the synergistic agent **[R2].**

Moreover, the amount of tetrabromobisphenol A bis (2,3-dibromopropylether) **[R1]** may not preferably exceed the one of the synergistic agent **[R2]** over a certain threshold.

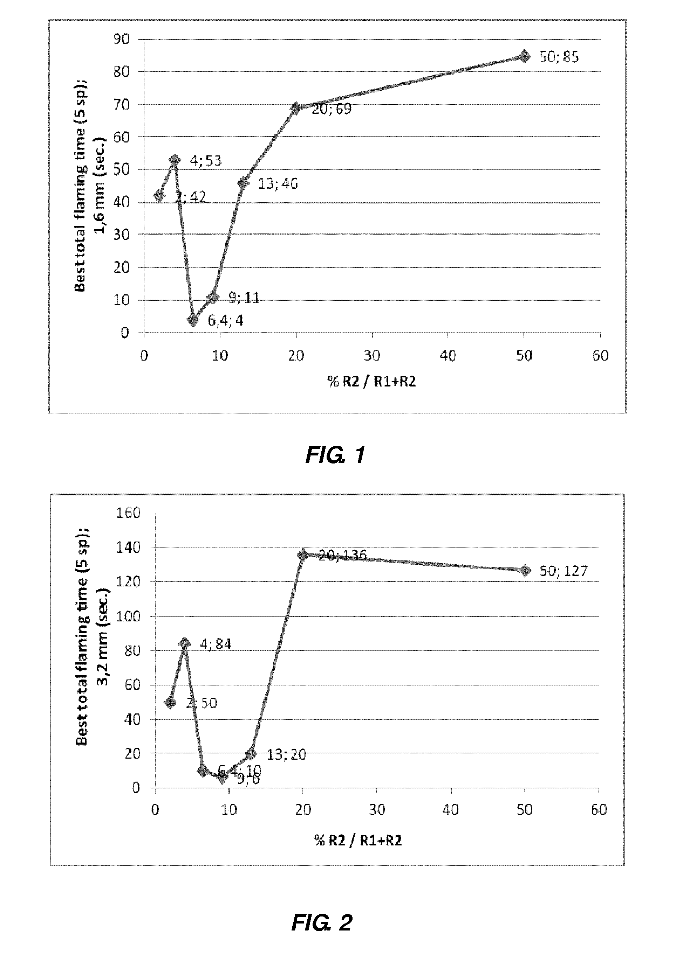

In order to determine this threshold, the performance of the best flame times of 5 specimens has been tested as a function of the percentage of synergistic agent **[R2]** with respect to the total weight of tetrabromobisphenol A bis (2,3-dibromopropylether) and synergistic agent **[R1+R2].** The results are analytically presented in the following Tables 2 and 3, and graphically in FIGS. 1 and 2. The table 2 and the graph of FIG. 1 refer to the test specimen by 1,6 mm, whereas Table 3 and the graph of FIG. 2 refer to that of 3,2 mm.

**Table 2**

| **% R2 / R1+R2** | **R1:R2** | **Best total flaming time (5 sp); 1,6 mm (sec.)** |
|---|---|---|
| 2 | 50:1 | 42 |
| 4 | 25:1 | 53 |
| 6,4 | 15,625:1 | 4 |
| 9 | 11,1:1 | 11 |
| 13 | 7,7:1 | 46 |
| 20 | 5:1 | 69 |
| 50 | 1:1 | 85 |

**Table 3**

| **%R2 / R1+R2** | **R1:R2** | **Best total flaming time (5 sp); 3,2 mm (sec.)** |
|---|---|---|
| 2 | 50:1 | 50 |
| 4 | 25:1 | 84 |
| 6,4 | 15,625:1 | 10 |
| 9 | 11,1:1 | 6 |
| 13 | 7,7:1 | 20 |
| 20 | 5:1 | 136 |
| 50 | 1:1 | 127 |

In order to obtain the best results, therefore, the weight ratio tetrabromobisphenol A bis (2,3-dibromopropylether): synergistic agent **R1:R2** may be of 50:1 and 2:1, preferably of 30:1 and 2: 1, and even more preferably of 20:1 and 2:1.

Ideally, the weight ratio tetrabromobisphenol A bis (2,3-dibromopropylether): synergistic agent **R1:R2** may be of 20:1 and 5:1.

In order to compare the performance of the flame-retardant composition according to the invention with the known flame-retardant compositions, some specimens C28-C31 having a composition according to the following Table 4 were prepared. All components are expressed in percentage by weight with respect to the total weight of the specimen. The raw materials used were as follows:
- Polypropylene marketed by Novapolimeri;
- Hexabromocyclododecane (HBCD) marketed by Sigma Aldrich;
- Antimony trioxide marketed by Sigma Aldrich;
- Fillers: talc marketed by Imifabi.

**Table 4**

| **Component** | | **C5** | **C11** | **C28** | **C29** | **C30** | **C31** |
|---|---|---|---|---|---|---|---|
| **Polystyrene** | | 99,04 | 98,62 | 98,97 | 95,54 | 95,00 | - |
| **Polypropylene** | | - | - | - | - | - | 97,50 |
| **R1** | | 0,40 | 0,80 | - | 3,00 | 3,40 | 1,80 |
| **R2** | | 0,06 | 0,08 | 0,03 | 0,16 | 0,20 | 0,20 |
| **HBCD** | | - | - | 0,50 | - | - | - |
| **Antimony trioxide** | | - | - | - | 0,80 | 0,90 | - |
| **Talc** | | 0,50 | 0,50 | 0,50 | 0,50 | 0,50 | 0,50 |
| **Max. time flaming** | **1,6 mm** | 20 | 3 | 2 | >60 | 19 | >60 |
| | **3,2 mm** | 16 | 3 | 2 | >60 | 16 | >60 |
| **Tot. time flaming (5 sp)** | **1,6 mm** | 62 | 11 | 9 | >300 | 126 | >300 |
| | **3,2 mm** | 100 | 6 | 3 | >300 | 94 | >300 |
| **Dipping specimens** | **1,6 mm** | All | All | All | All | All | All |
| | **3,2 mm** | All | All | All | All | All | All |
| **Cotton ignition** | **1,6 mm** | Yes | Yes | Yes | Yes | Yes | Yes |
| | **3,2 mm** | Yes | Yes | Yes | Yes | Yes | Yes |
| **Rating** | **1,6 mm** | V2 | V2 | V2 | HB | V2 | V2 |
| | **3,2 mm** | V2 | V2 | V2 | HB | V2 | V2 |

As synergistic agent **[R2]** dicumene was used. All specimens C28-C31 were tested according to the known test UL94 V-2. Similarly to the specimens C1-C27, C28-C31 specimens were prepared by inserting the various components in a press to mold them, according to the specifications of the UL94 test. The results of these tests are summarized in the following Table 4, which includes, for comparative purposes, also the above described specimens C5 and C11.

From the results in Table 4, for example by comparison of specimens C11 and C28, it is evident that the flame retardant additive according to the invention has the same effectiveness of a flame retardant additive which includes hexabromocyclododecane but without the problems of impact on the environment and/or on human health the latter notoriously involves.

From the results in Table 4, for example by comparison of specimens C5, C11, C29 and C30, it is clear that the absence of antimony trioxide in the additive flame retardant positively influences the behavior thereof.

In fact, the flame retardant additive according to the invention has much better performance in terms of efficacy and/or dosing, in addition to a lower environmental impact and/or on human health.

From the results in Table 4, for example by comparison of specimens C5, C11 and C31, it is interesting to notice that the flame retardant additive according to the invention, which is very effective for polystyrene, completely loses effectiveness when added to a compound polypropylene-based.

In order to verify the performance of the flame-retardant composition according to the invention in a high impact polystyrene-based compound, some specimens C32-C36 having a composition according to the following Table 5 have been prepared. All components are expressed in percentage by weight with respect to the total weight of the specimen. The high impact polystyrene (HIPS) used was the Krasten^{®} 552M by Synthos. All other raw materials listed in Table 5 were the same as above.

As synergistic agent **[R2]** dicumene was used. All specimens C32-C36 were tested according to the known test UL94 V-2. Similarly to the specimens C1-C31, C32-C36, specimens were prepared by inserting the various components in a press to mold the same, according to the specifications of the UL94 test. The results of these tests are summarized in the following Table 5.

**Table 5**

| **Component** | | **C32** | **C33** | **C34** | **C35** | **C36** |
|---|---|---|---|---|---|---|
| **HIPS** | | 100,00 | 96,30 | 69,00 | 97,00 | 94,50 |
| **R1** | | - | 3,30 | 3,60 | - | 4.5 |
| **R2** | | - | 0,40 | 0,40 | - | - |
| **HBCD** | | - | - | - | 3,00 | - |
| **Antimony trioxide** | | - | - | - | - | 1,50 |
| **Max. time flaming** | **1,6 mm** | > 60 | 13 | 10 | 12 | 18 |
| | **3,2 mm** | > 60 | 4 | 4 | 4 | 7 |
| **Tot. time flaming (5 sp)** | **1,6 mm** | > 300 | 61 | 52 | 43 | 68 |
| | **3,2 mm** | > 300 | 26 | 17 | 22 | 31 |
| **Dipping specimens** | **1,6 mm** | All | All | All | All | All |
| | **3,2 mm** | All | All | All | All | All |
| **Cotton ignition** | **1,6 mm** | Yes | Yes | Yes | Yes | Yes |
| | **3,2 mm** | Yes | Yes | Yes | Yes | Yes |
| **Rating** | **1,6 mm** | HB | V2 | V2 | V2 | V2 |
| | **3,2 mm** | HB | V2 | V2 | V2 | V2 |

From the results in Table 5, for example by comparison of specimens C33, C34, C35 and C36, it is evident that the flame retardant additive according to the invention has the same effectiveness of a flame retardant additive which includes hexabromocyclododecane or antimony trioxide but without the problems of impact on environment and/or on human health that the latter notoriously entails.

From the results in Table 5, for example by comparison of specimens C33, C34 and C36, it is clear that the absence of antimony trioxide in the additive flame retardant positively influences the behavior thereof. In fact, the flame retardant additive of the invention has much better performance in terms of efficacy and/or dosing, in addition to a lower impact on the environment and/or on the human health.

From the above description, it is clear that the invention achieves the intended objects.

## Claims

1. A flame-retardant composition for polystyrenic foams or for high impact polystyrene-based compounds consisting exclusively of:
- a single brominated compound **(R1);**
- a nitrogen- and bromine-free single free radical generator synergistic agent **(R2);**
wherein said single brominated compound **(R1)** consists exclusively of tetrabromobisphenol A-bis (2,3-dibromopropylether), said synergistic agent **(R2)** consisting exclusively of 2,3-dimethyl-2,3-difenylbutane and/or bis (1-methyl-1-phenylethyl) peroxide;
wherein the composition is free of antimony trioxide and hexabromocyclododecane;
wherein the weight ratio between the tetrabromobisphenol A bis (2,3-dibromopropylether) and said synergistic agent **(R1: R2)** is of 100:1 to 1:2.

2. Composition according to claim 1, wherein the weight ratio between the tetrabromobisphenol A bis (2,3-dibromopropylether) and said synergistic agent **(R1: R2)** is of 50:1 to 2:1, preferably of 30:1 to 2:1 and even more preferably of 20:1 to 2:1.

3. Composition according to claim 1, wherein the weight ratio between the tetrabromobisphenol A bis (2,3-dibromopropylether) and said synergistic agent **(R1: R2)** is of 20:1 to 5:1.

4. The use of the composition according to claim 1, 2 or 3 as a flame retardant additive in a polystyrene foam or a high impact polystyrene-based compound.

5. Use according to claim 4, wherein the flame retardant additive is included in the polystyrene foam or in the high impact polystyrene-based compound via a concentrated mixture of additives that includes the flame-retardant composition according to claim 1, 2 or 3, the concentrated mixture of additives preferably having the form of a masterbatch, a tablet or a compacted.

6. The use of the composition according to claim 1, 2 or 3 for the preparation of a concentrated mixture of additives to be included in a polystyrene foam or a high impact polystyrene-based compound, the concentrated mixture of additives preferably having the form of a masterbatch, a tablet or a compacted.

7. A polystyrene foam consisting of:
(A) 50% - 99,5% by weight, preferably 80% - 99,5% by weight of sintered (EPS) or extruded (XPS) type polystyrene;
(B) 0,45% - 10% by weight, preferably 0,45% - 5% by weight, more preferably 0,45% - 3% by weight, even more preferably 0,45% - 1% by weight, of a flame-retardant composition according to claim 1, 2 or 3;
(C) 0% - 50% by weight, preferably 0,1% - 10% by weight, more preferably 0,1% - 5% by weight, of at least one additive selected from the group consisting of: fillers, process aids, stabilizers, impact modifiers, pigments, lubricants, antioxidants, anti-UV agents, nucleating agents, compatibilizers, expanding gases, polyethylene waxes and/or copolymers thereof;
wherein the sum of the weight percentages of said components (A), (B) and (C) is 100%.

8. Polystyrene foam according to the preceding claim, wherein said component (B) includes:
- tetrabromobisphenol A-bis (2,3-dibromopropylether) **(R1)** in a weight percentage of 0,1% to 9,99% by weight with respect to the total weight of the polystyrene foam, preferably of 0,1% to 5% by weight with respect to the total weight of the polystyrene foam, and even more preferably of 0,1% to 3% by weight with respect to the total weight of the polystyrene foam;
- said synergistic agent **(R2)** in a weight percentage of 0,01% to 5% by weight with respect to the total weight of the polystyrene foam, and preferably of 0,01% to 1% by weight with respect to the total weight of the polystyrene foam.

9. A high impact polystyrene-based compound consisting of:
(A) 20% - 99,5% by weight, preferably 60% - 95% by weight of high impact polystyrene;
(B) 0,1% - 25% by weight, preferably 0,5% - 10% by weight, more preferably 1% - 6% by weight, even more preferably 2% - 4% by weight, of a flame retardant composition according to claim 1, 2 or 3;
(C) 0% - 50% by weight, preferably 0,1% - 20% by weight, more preferably 0,1% - 10% by weight, of at least one additive selected from the group consisting of: fillers, process aids, stabilizers, impact modifiers, pigments, lubricants, antioxidants, anti-UV agents, nucleating agents, compatibilizers, polyethylene waxes and/or copolymers thereof;
wherein the sum of the weight percentages of said components (A), (B) and (C) is 100%.

10. High impact polystyrene-based compound according to the preceding claim, wherein said component (B) includes:
- tetrabromobisphenol A-bis (2,3-dibromopropylether) **(R1)** in a weight percentage of 0,1% to 24,99% by weight with respect to the total weight of the compound, preferably of 0,1% to 10% by weight with respect to the total weight of the compound, and even more preferably of 0,1% to 6% by weight with respect to the total weight of the compound;
- said synergistic agent **(R2)** in a weight percentage of 0,01% to 5% by weight with respect to the total weight of the compound, and preferably of 0,01% to 2% by weight with respect to the total weight of the compound.

11. A concentrated mixture of additives suitable to be included in a polystyrene foam or in a high impact polystyrene-based compound consisting of:
(A) 0% - 60% by weight, preferably 25% - 55% by weight, more preferably 30% - 50% by weight, of a carrier material;
(B) 5% - 100% by weight, preferably 40% - 70% by weight of a flame-retardant composition according to claim 1, 2 or 3;
(C) 0% - 50% by weight, preferably 15% - 30% by weight, more preferably 20% - 25% by weight, of at least one additive selected from the group consisting of: fillers, process aids, stabilizers, pigments, lubricants, antioxidants, anti-UV agents, compatibilizers;
wherein the sum of the weight percentages of said components (A), (B) and (C) is 100%.

12. Mixture according to the preceding claim, wherein said component (B) includes:
- tetrabromobisphenol A-bis (2,3-dibromopropylether) **(R1)** in a weight percentage of 13% to 95% by weight with respect to the total weight of the mixture, and preferably of 30% to 90% by weight with respect to the total weight of the mixture;
- said synergistic agent **(R2)** in a weight percentage of 0,1% to 10% by weight with respect to the total weight of the mixture, and preferably of 0,5% to 6% by weight with respect to the total weight of the mixture.

13. Mixture according to claim 11 or 12, wherein said carrier material is selected from polystyrenes, polyolefins or waxes.

14. Mixture according to claim 11, 12 or 13, in the form of a masterbatch, a tablet or a compacted.

15. A polymeric article including, respectively consisting of, the polystyrene foam according to claim 7 or 8 or the high impact polystyrene-based compound according to claim 9 or 10.
